# EUROPÄISCHE PATENTANMELDUNG

(11) **EP 4 447 242 A1**
(43) Veröffentlichungstag der Anmeldung: **16.10.2024**
(21) Anmeldenummer: 24159702.0
(22) Anmeldetag: 26.02.2024
(51) Int. Cl.: H02G 3/08, B60L 53/31, H02G 3/14

(54) **LADEEINRICHTUNG FÜR EIN ELEKTROFAHRZEUG**

(30) Priorität: 06.04.2023 DE 102023108876
(71) Anmelder: Bender GmbH & Co. KG, 35305 Grünberg (DE)
(72) Erfinder: MÖLL, Winfried, 35321 Laubach (DE); STREICHER, Holger, 01920 Lehndorf (DE)
(74) Vertreter: advotec.

(57) **Zusammenfassung**

Die Erfindung betrifft eine Ladeeinrichtung (2) zum Anschließen eines Ladekabels für die Verbindung mit einem Elektrofahrzeug, umfassend ein Gehäuse (4) mit einer Gehäuserückwand (6), welche Befestigungsstrukturen (14) zur Wandmontage an einer Befestigungsfläche aufweist, wobei die Gehäuserückwand (6) eine Installationsöffnung (10) aufweist, die von einer Umrahmung (12) begrenzt ist, an der die Befestigungsstrukturen (14) angeformt sind.

## Beschreibung

Die Erfindung betrifft eine Ladeeinrichtung zum Anschließen eines Ladekabels für die Verbindung mit einem Elektrofahrzeug, umfassend ein Gehäuse mit einer Gehäuserückwand, welche Befestigungsstrukturen zur Wandmontage an einer Befestigungsfläche aufweist.

Bekannt sind AC- oder DC-Ladeeinrichtungen in privaten, gewerblichen oder öffentlichen Bereichen, die in verschiedenen Ausführungsvarianten angeboten werden. Der Anschluss an ein Stromversorgungssystem erfolgt über ein Installationskabel, das je nach Leistungsklasse unterschiedlich ausgeführt ist, z. B. einphasig (230 V/32 A oder 400 V/16 A) oder dreiphasig (400 V/16 A oder 400 V/32 A).

Die Ladeeinrichtungen können sich dabei in ihrer Ausgestaltung erheblich unterscheiden. Beispielsweise sind fertig konfektionierte Geräte, bestehend aus einer Montageplatte, Unterschale und Abdeckung möglich, welche teilweise mit Serviceklappen oder Schmuckabdeckungen versehen sind, die verschraubt, verrastet oder abschließbar montiert werden. Daneben weisen einige Ladeeinrichtungen noch Zusatzelemente wie Schrauben in Sonderausführung oder Schlüssel auf, die den Zugang auf Fachpersonal oder berechtigte Personen begrenzen oder den einfachen Zugang durch einen Laien erschweren. In anderen Fällen sind die Ladeeinrichtungen vollständig verschlossen und bieten nur eine Anschlussmöglichkeit an die Grundinstallation des Stromversorgungssystems.

Aufgrund dieser herstellerspezifischen Geometrien und unterschiedlichen elektrischen Schnittstellen stellt jede Montage einer Ladeeinrichtung eine individuelle Lösung dar. Insbesondere der Anschluss des Installationskabels an die Ladeeinrichtung, wie beispielsweise die Länge und der Durchmesser der Installationskabel und die Abisolierung der Einzeladern, muss hierbei zwingend an die Gegebenheiten der jeweiligen Ladeeinrichtung angepasst werden. Die Montage des oft starren Installationskabels der Grundinstallation ist somit zeitgleich mit der Installation der Ladeeinrichtung durchzuführen, da das Installationskabel durch dedizierte Kabelverschraubungen an die Ladeeinrichtung geführt wird und keine offenen Leitungen aus sicherheitstechnischen Gründen akzeptiert werden. Die Montagefreundlichkeit gestaltet sich dabei je nach verwendetem Installationskabel, z. B. in Bezug auf die Länge, den Querschnitt oder die Flexibilität, sehr unterschiedlich. Auch bei einem Austausch der Ladeeinrichtung ist die elektrische Grundinstallation aufgrund neuer geometrischer und elektrischer Rahmenbedingungen, wie z. B. Kabellänge, Kabelquerschnitt oder Geräteleistung, neu zu konfigurieren und zu installieren.

Die Installation einer Ladeeinrichtung erfordert somit zeitliche und materielle Aufwendungen sowie personelle Ressourcen und erzeugen damit für den Anwender unattraktive Mehrkosten.

Der vorliegenden Erfindung liegt somit die Aufgabe zugrunde, die Montage einer Ladeeinrichtung, insbesondere den Anschluss an ein Stromversorgungsystem, zu vereinfachen.

Diese Aufgabe wird in Verbindung mit den Merkmalen des Oberbegriffs in Anspruch 1 dadurch gelöst, dass die Gehäuserückwand eine Installationsöffnung aufweist, die von einer Umrahmung begrenzt ist, an der die Befestigungsstrukturen angeformt sind.

In dieser Grundausführung ist die Gehäuserückwand der Ladeeinrichtung mit einer Installationsöffnung versehen, durch die eine Zuführung des Installationskabels des Stromversorgungssystems erfolgt. Die Installationsöffnung ist durch eine Umrahmung begrenzt, die Befestigungsstrukturen zur Montage an einer Befestigungsfläche wie beispielsweise an einer Gebäudewand aufweist.

In einer ersten Montagevariante liegt die Gehäuserückwand in wandmontiertem Zustand auf der Befestigungsfläche an und ist mittels der Befestigungsstrukturen der Umrahmung an der Befestigungsfläche befestigt.

Die Ladeeinrichtung kann somit unmittelbar, beispielsweise an der Gebäudewand, befestigt werden, wobei das Installationskabel durch die Installationsöffnung an der Gehäuserückwand in das Gehäuse der Ladeeinrichtung eingeführt ist. Diese Montagevariante bietet sich an Befestigungsflächen an, wo ein (Wand-)Auslass der Elektroinstallation ohne Installationsmittel (Installationsdosen) vorliegt.

Bevorzugt kann zwischen die Gehäuserückwand und die Befestigungsfläche ein Dichtmittel eingefügt sein.

Zur Abdichtung gegenüber dem Eindringen von Feuchtigkeit und Staub kann ein Dichtmittel, beispielsweise als umlaufende Abdichtungseinlage, zwischen die Gehäuserückwand und die Befestigungsfläche eingefügt sein.

Ergänzend oder alternativ dazu kann eine Feuchtigkeitsabführung vorgesehen sein.

In einer zweiten Montagevariante ist die Umrahmung der Installationsöffnung entsprechend der Kontur einer Deckelumrandung einer vorinstallierten Installationsdose geformt, sodass die Gehäuserückwand mittels der Befestigungsstrukturen der Umrahmung an der Installationsdose anstelle eines Installationsdosen-Deckels befestigbar ist und den Isolationsdosen-Deckel ersetzt.

Diese Montagevariante beruht auf dem Grundgedanken, eine - nicht zur Erfindung gehörende - vorinstallierte Installationsdose als mechanische und elektrische Schnittstelle und damit als einheitliche und von der Ladeeinrichtung unabhängige Grundinstallation zu nutzen, an der die Ladeeinrichtung mit einer entsprechend der Installationsdose angepassten Installationsöffnung montiert werden kann.

Durch die zeitlich entkoppelte Installation der Ladeeinrichtung an der Installationsdose (Grundinstallation) wird eine einfache "Plug and play"-Montage der Ladeeinrichtung ohne die Notwendigkeit einer aufwendigen elektrischen und mechanischen Anpassung durch einen Fachbetrieb geschaffen.

In vorteilhafterweise wird damit ein hoher Grad an Flexibilität und Unabhängigkeit hinsichtlich des Zeitpunktes der Grundinstallation und der Montage der Ladeeinrichtung geschaffen. Außerdem kann die derzeitige unüberschaubare Vielfalt an elektrischen und mechanischen Schnittstellen auf bereits bekannte und normierte Installationsdosen begrenzt werden und stellt damit einen ökonomischen und auch ökologischen Mehrwert durch die Einsparung von Material- und Zeitressourcen dar.

Zur Montage der Ladeeinrichtung weist die Gehäuserückwand eine Installationsöffnung auf, die von einer Umrahmung begrenzt ist, welche die Kontur der Deckelumrandung der vorinstallierten Installationsdose aufweist und an der Installationsdose befestigt wird - die Gehäuserückwand der Ladeeinrichtung ersetzt somit den Isolationsdosendeckel.

Vorteilhafterweise ist die Gehäuserückwand austauschbar und herstellerspezifisch mit einer an die verwendete Installationsdose angepassten Umrahmung ausgeführt.

Es stehen unterschiedliche Gehäuserückwände zur Auswahl, deren jeweilige Installationsöffnung einschließlich der Umrahmung geometrisch an die in der Grundinstallation verwendete Isolationsdose herstellerspezifisch angepasst ist.

Die Gehäuserückwand ist dabei als Einzelteil oder einstückig mit dem Gehäuse austauschbar ausgeführt, sodass eine herstellerspezifisch ausgestaltete Installationsöffnung mit ihrer Umrahmung passgenau auf die verwendete Installationsdose montierbar ist.

Zwischen die Umrahmung und die Installationsdose kann ein Dichtmittel eingefügt sein, um ein Eindringen von Feuchtigkeit und Staub zu verhindern.

In einer dritten Montagevariante ist die Umrahmung der Installationsöffnung mittels eines herstellerspezifischen Adapterteils an der Installationsdose befestigbar.

Bei einer zeitlich entkoppelten Montage der Ladeeinrichtung ermöglicht das Adapterteil, eine Ladeeinrichtung der stets gleichen Form mit der örtlich vorgefundenen Installationsdose zu verwenden. Dadurch können die Investitionskosten für die Installation der Ladeeinrichtung gesenkt und die "Installations-Flexibilität" erhöht werden.

Auch bei dieser Montagevariante kann zwischen die Umrahmung und das Adapterteil sowie zwischen das Adapterteil und die Installationsdose jeweils ein Dichtmittel eingefügt sein, um ein Eindringen von Feuchtigkeit und Staub zu verhindern.

In allen Montagevarianten ist die Umrahmung der Gehäuserückwand mittels Schraubverbindungen befestigbar.

Die die Installationsöffnung der Gehäuserückwand begrenzende Umrahmung wird durch Schraubverbindungen an der Befestigungsfläche (an der Wandfläche in erster Montagevariante) oder an dem Unterteil der Installationsdose (mittels Deckelschrauben in zweiter Montagevariante) oder an dem Adapterteil (dritte Montagevariante) befestigt.

Mit Vorteil weist das Gehäuse kanalartige horizontale und vertikale Ausformungen auf, entlang derer ein Installationskabel geführt ist.

Die Ausformungen in der Gehäuserückwand und in den Seitenflächen des Gehäuses ermöglichen somit eine den räumlichen Gegebenheiten entsprechende und geschützte Verlegung des zugeführten Installationskabels.

Weiter weisen die Seitenflächen des Gehäuses Aussparungen oder herausbrechenbare Wandungsabschnitte zum Zuführen des Installationskabels auf.

Aussparungen in den Seitenflächen des Gehäuses oder herausbrechenbare Wandungsabschnitte in den Seitenflächen ermöglichen in Verbindung mit den kanalartigen horizontalen und vertikalen Ausformungen eine ebene Wandmontage der Ladeeinrichtung mit exakter Leitungszuführung des Installationskabels.

Weiter ist ein Verbindungskabel der Ladeeinrichtung mit dem Installationskabel mittels Klemmverbindung verbunden.

Ein Verbindungskabel stellt die elektrische Verbindung der Ladeeinrichtung mit dem Installationskabel über eine Klemmverbindung her, die vorzugsweise als Schraubklemme, schraublose Klemme oder Federkraftklemme ausgeführt ist.

Weitere zweckmäßige Ausgestaltungsmerkmale werden anhand bevorzugter, in den Zeichnungen veranschaulichter Ausführungsbeispiele erläutert.

Dabei zeigen:
- **Fig. 1**: eine erfindungsgemäße Ladeeinrichtung in Einzelansichten;
- **Fig. 2**: die Ladeeinrichtung in perspektivischer Ansicht;
- **Fig. 3**: die Ladeeinrichtung mit Installationsdose in Einzelansichten,
- **Fig. 4**: die Ladeeinrichtung mit Installationsdose in perspektivischer Ansicht und
- **Fig.5**: schematisch die Ladeeinrichtung mit Adapterteil und Installationsdose.

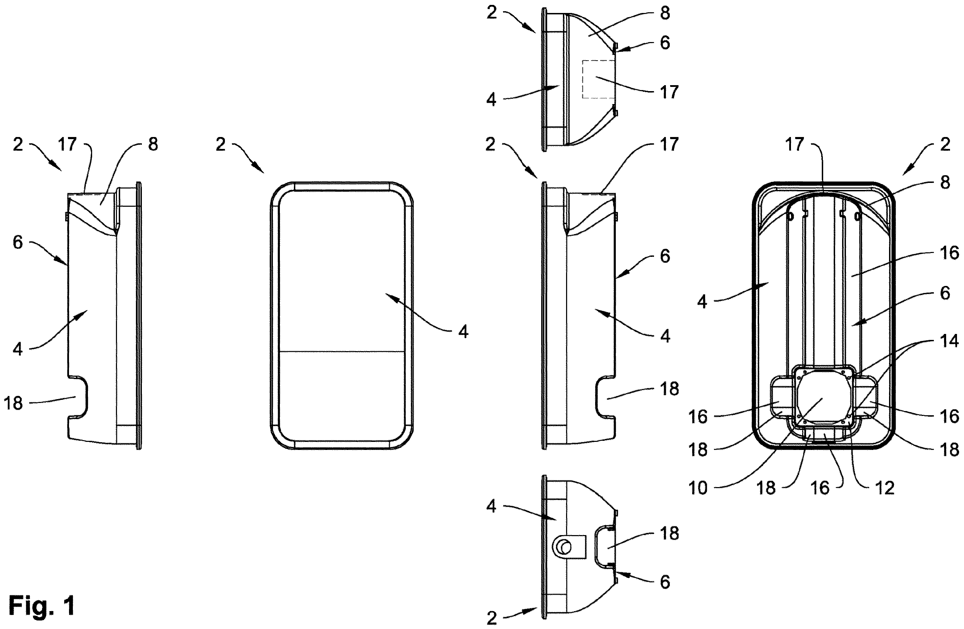

**Fig. 1** zeigt die Grundausführung der Ladeeinrichtung 2 in Einzelansichten aus verschiedenen Perspektiven.

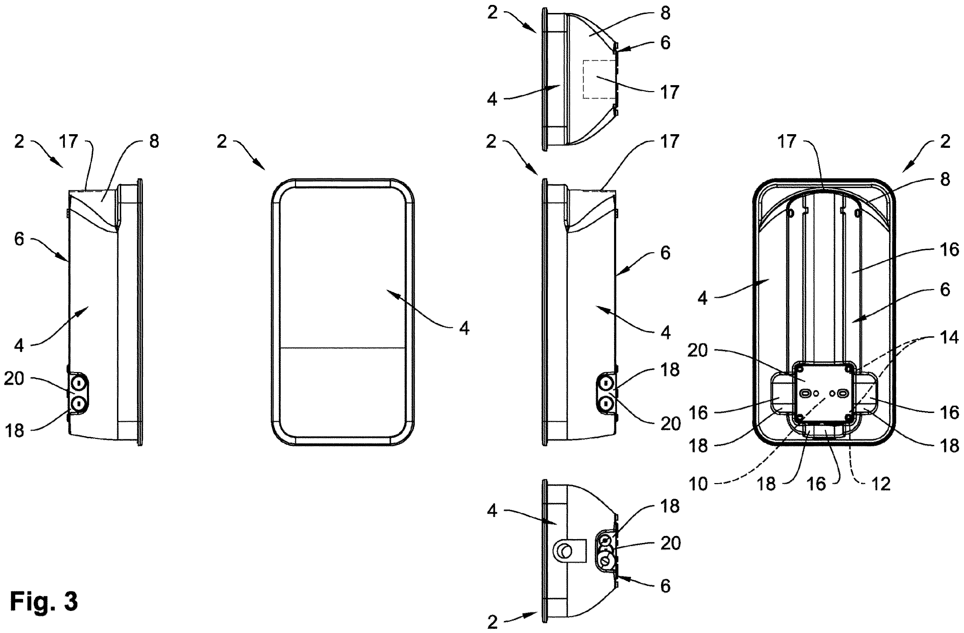

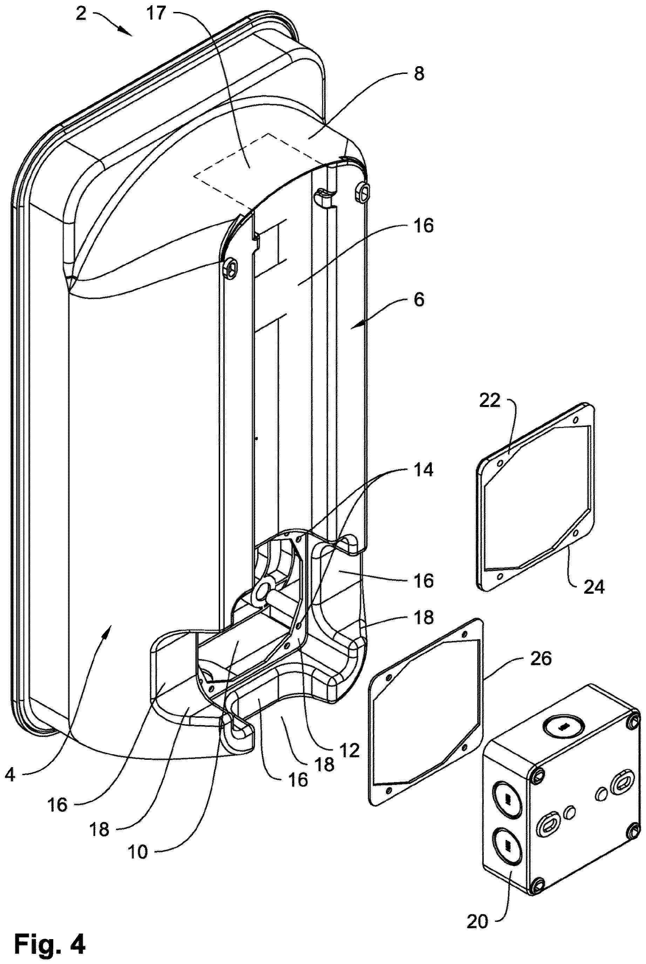

Die Darstellung rechts zeigt eine Gehäuserückwand 6 mit einer Installationsöffnung 10, die durch eine Umrahmung 12 begrenzt wird. Die Umrahmung 12 besitzt im Hinblick auf die Verwendung mit einer Installationsdose 20 (Fig. 3, Fig. 4) im Wesentlichen die Kontur einer äußeren Deckelumrandung 24 (Fig. 4) des Isolationsdosen-Deckels 22 der Installationsdose 20, sodass die Umrahmung 12 passgenau an der Installationsdose 20 mittels Befestigungsstrukturen 14 befestigt werden kann. Die Befestigungsstrukturen 14 sind vorliegend als Bohrungen für Schraubverbindungen ausgeführt.

Die Gehäuserückwand 6 kann somit in der ersten Montagevariante direkt an eine Befestigungsfläche, beispielsweise an eine Gebäudewand, verschraubt werden.

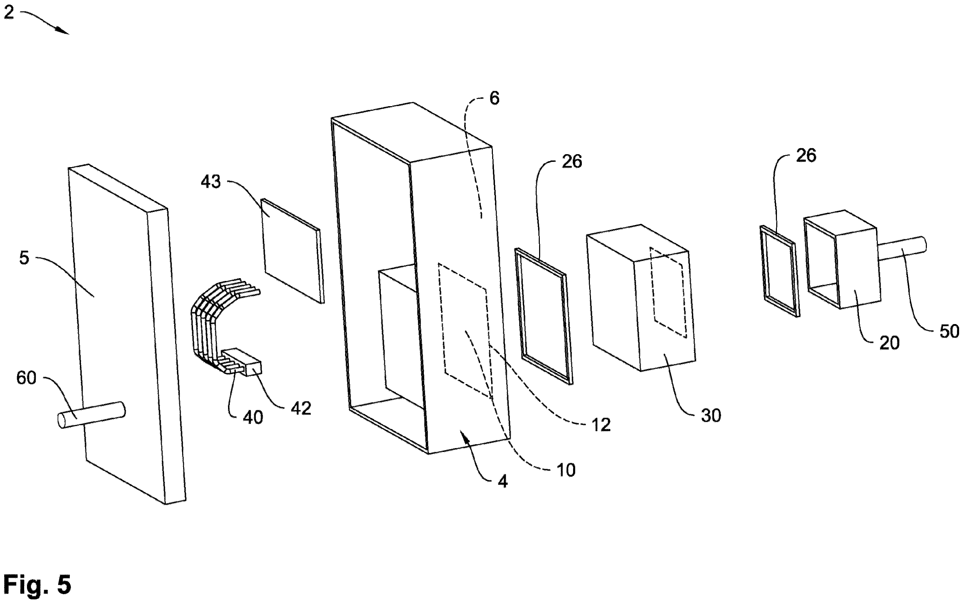

Das Gehäuse 4 weist kanalartige horizontale und vertikale Ausformungen 16 auf, durch die ein Installationskabel 50 (Fig. 5) zugeführt werden kann. An den Seitenflächen 8 des Gehäuses 4 befinden sich in Höhe der Ausformungen 16 Aussparungen 18 oder herausbrechenbare Wandungsabschnitte 17 für die Kabelzuführung, sodass eine wandparallel aufliegende Montageposition ermöglicht wird.

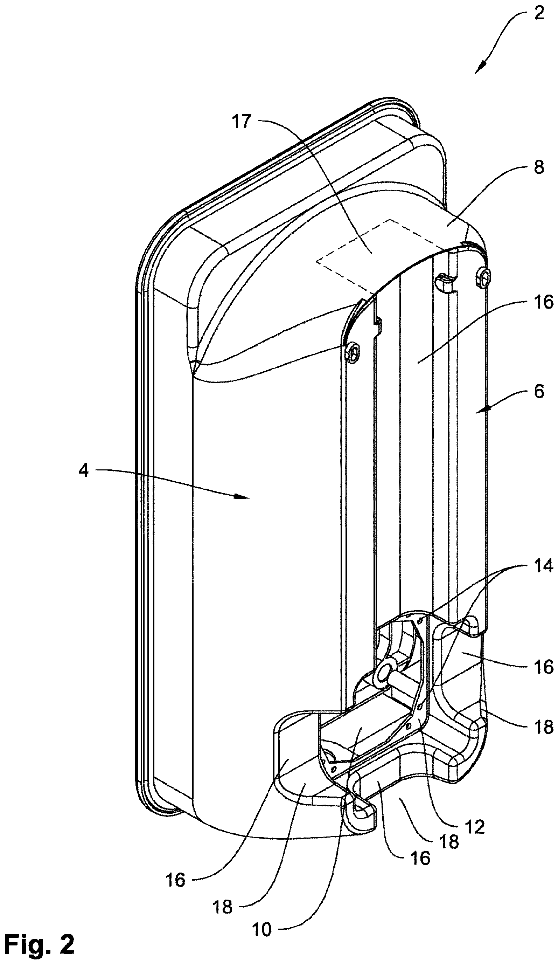

In **Fig. 2** ist die Ladeeinrichtung 2 zusammenfassend in perspektivischer Ansicht dargestellt.

**Fig. 3** zeigt die Ladeeinrichtung 2 in der zweiten Montagevariante mit Installationsdose 20 in Einzelansichten aus verschiedenen Perspektiven.

Die - nicht zur Erfindung gehörende - vorinstallierte Installationsdose 20 ist in die Gehäuserückwand 6 eingepasst und mit der Gehäuserückwand 6 an der Umrahmung 12 der Installationsöffnung 10 mittels Befestigungsstrukturen 14 (Schraubverbindungen) befestigt.

In montiertem Zustand ersetzt somit die Gehäuserückwand 6 den Isolationsdosen-Deckel 22, wodurch die Ladeeinrichtung 2 in ihrer Montageposition gehalten wird.

In **Fig. 4** ist die Ladeeinrichtung 2 mit Installationsdose 20 zusammenfassend in perspektivischer Ansicht in nicht montiertem Zustand dargestellt.

Der Installationsdosen-Deckel 22 wird bei der Befestigung des Gehäuses 4 an der Installationsdose 20 durch die Gehäuserückwand 6 ersetzt.

Zum Schutz vor Feuchtigkeit und Staub ist ein Dichtmittel 26 zwischen die Umrahmung 12 der Gehäuserückwand 6 und die Installationsdose 20 eingefügt.

**Fig. 5** zeigt die Ladeeinrichtung 2 in der dritten Montagevariante mit Adapterteil 30 und Installationsdose 20.

Die Gehäuserückwand 6 des Gehäuses 4 zeigt schematisch die Installationsöffnung 10 mit der begrenzenden Umrahmung 12. An dieser Umrahmung 12 ist das Adapterteil 30 befestigt, das wandseitig mittels weiterer Befestigungselemente (Deckelschrauben) auf die Installationsdose 20 anstelle des Installationsdosen-Deckels 22 (Fig. 4) montiert ist und somit die geometrische Anpassung des stets gleich ausgeführten Gehäuses 4 an die vorinstallierte Installationsdose 20 herstellt.

Zwischen die Umrahmung 12 und das Adapterteil 30 sowie zwischen das Adapterteil 30 und die Installationsdose 20 ist jeweils ein Dichtmittel 26 eingefügt.

Ein Verbindungskabel 40 zur internen Stromversorgung der Elektronik 43 der Ladeeinrichtung 2 ist mittels Klemmverbindung 42 mit dem Installationskabel 50 verbindbar.

An einer frontseitigen Abdeckung 5 ist ein Ladekabel 60 für die Verbindung mit einem Elektrofahrzeug angeschlossen.

## Patentansprüche

1. Ladeeinrichtung (2) zum Anschließen eines Ladekabels (60) für die Verbindung mit einem Elektrofahrzeug, umfassend ein Gehäuse (4) mit einer Gehäuserückwand (6), welche Befestigungsstrukturen (14) zur Wandmontage an einer Befestigungsfläche aufweist,
**dadurch gekennzeichnet, dass**
die Gehäuserückwand (6) eine Installationsöffnung (10) aufweist, die von einer Umrahmung (12) begrenzt ist, an der die Befestigungsstrukturen (14) angeformt sind.

2. Ladeeinrichtung (2) nach Anspruch 1,
**dadurch gekennzeichnet,**
**dass** in wandmontiertem Zustand die Gehäuserückwand (6) auf der Befestigungsfläche anliegt und mittels der Befestigungsstrukturen (14) der Umrahmung (12) an der Befestigungsfläche befestigbar ist.

3. Ladeeinrichtung (2) nach Anspruch 2,
**dadurch gekennzeichnet,**
**dass** zwischen die Gehäuserückwand (6) und die Befestigungsfläche ein Dichtmittel (26) eingefügt ist.

4. Ladeeinrichtung (2) nach Anspruch 1,
**dadurch gekennzeichnet,**
**dass** die Umrahmung (12) der Installationsöffnung (10) entsprechend der Kontur einer Deckelumrandung (24) einer vorinstallierten Installationsdose (20) geformt ist, sodass die Gehäuserückwand (6) mittels der Befestigungsstrukturen (14) der Umrahmung (12) an der Installationsdose (20) anstelle eines Installationsdosen-Deckels (22) befestigbar ist und den Isolationsdosen-Deckel (22) ersetzt.

5. Ladeeinrichtung (2) nach Anspruch 4,
**dadurch gekennzeichnet,**
**dass** die Gehäuserückwand (6) austauschbar und herstellerspezifisch mit einer an die verwendete Installationsdose (20) angepassten Umrahmung (12) ausgeführt ist.

6. Ladeeinrichtung (2) nach Anspruch 4 oder 5,
**dadurch gekennzeichnet,**
**dass** zwischen die Umrahmung (12) und die Installationsdose (20) ein Dichtmittel (26) eingefügt ist.

7. Ladeeinrichtung (2) nach Anspruch 1,
**dadurch gekennzeichnet,**
**dass** die Umrahmung (12) der Installationsöffnung (10) mittels eines herstellerspezifischen Adapterteils (30) an der Installationsdose (20) befestigbar ist.

8. Ladeeinrichtung (2) nach Anspruch 7,
**dadurch gekennzeichnet,**
**dass** zwischen die Umrahmung (12) und das Adapterteil (30) sowie zwischen das Adapterteil (30) und die Installationsdose (20) jeweils ein Dichtmittel (26) eingefügt ist.

9. Ladeeinrichtung (2) nach einem der Ansprüche 1 bis 8,
**dadurch gekennzeichnet,**
**dass** die Umrahmung (12) der Gehäuserückwand (6) mittels Schraubverbindungen befestigbar ist.

10. Ladeeinrichtung (2) nach einem der Ansprüche 1 bis 9,
**dadurch gekennzeichnet,**
**dass** das Gehäuse (4) kanalartige horizontale und vertikale Ausformungen (16) aufweist, entlang derer ein Installationskabel (50) geführt ist.

11. Ladeeinrichtung (2) nach einem der Ansprüche 1 bis 10,
**dadurch gekennzeichnet,**
**dass** Seitenflächen des Gehäuses Aussparungen (18) oder herausbrechenbare Wandungsabschnitte (17) zum Zuführen des Installationskabels (50) aufweisen.

12. Ladeeinrichtung (2) nach einem der Ansprüche 1 bis 11,
**dadurch gekennzeichnet,**
**dass** ein Verbindungskabel (60) der Ladeeinrichtung (2) mit dem Installationskabel (50) mittels Klemmverbindung (42) verbunden ist.
